# EUROPEAN PATENT APPLICATION

(11) **EP 4 852 509 A1**
(43) Date of publication of application: **09.12.2026**
(21) Application number: 24920918.0
(22) Date of filing: 31.01.2024
(51) Int. Cl.: H04W 28/06

(54) **COMMUNICATION METHOD AND DEVICE, AND STORAGE MEDIUM**

(71) Applicant: Beijing Xiaomi Mobile Software Co., Ltd., Beijing 100085 (CN)
(72) Inventor: CHENG, Yajun, Beijing 100085 (CN)
(74) Representative: Dehns Germany Partnerschaft mbB
(86) International application number: PCT/CN2024/075077
(87) International publication number: WO 2025/160851

(57) **Abstract**

The embodiments of the present disclosure relate to the technical field of communications. Provided are a communication method and device, and a storage medium. The method is applied to a first communication device, and comprises: receiving a data frame after negotiating with a second communication device to establish a block acknowledgement (BA) mechanism; and sending a first radio frame, wherein the first radio frame is configured to indicate an in-device coexistence activity status of a first communication device during the reception of the data frame and/or after completing the reception of the data frame. The embodiments of the present disclosure can provide the manner in which the in-device coexistence activity status is indicated.

## Description

### TECHNICAL FIELD

The present disclosure relates to the technical field of communication, and in particular, to a communication method, device, and storage medium.

### BACKGROUND

With the development of wireless communication technology, the integration of terminal devices is becoming increasingly higher. One terminal device often supports multiple wireless communication protocols, integrates multiple wireless communication modules and simultaneously accesses multiple wireless networks, such as Wireless Local Area Networks (WLAN), Long Term Evolution (LTE) system, Bluetooth (BT) and Global Navigation Satellite System (GNSS).

The simultaneous communication of multiple communication modes means that there is in-device coexistence (IDC) in the communication device. At this time, the multiple communication modes may interfere with each other, resulting in communication failure or performance loss.

### SUMMARY

Embodiments of the present disclosure provide a communication method, device, and storage medium.

In a first aspect, an embodiment of the present disclosure provides a communication method, applied to a first communication device, the method including:
receiving a data frame after negotiating with a second communication device to establish a block acknowledgement (BA) mechanism; and
sending a first radio frame, where the first radio frame is used to indicate a state of in-device coexistence of the first communication device during reception of the data frame and/or after reception of the data frame is completed.

In a second aspect, an embodiment of the present disclosure provides a communication method, applied to a second communication device, the method including:
sending a data frame after negotiating with a first communication device to establish a BA mechanism; and
receiving a first radio frame, where the first radio frame is used to indicate a state of in-device coexistence of the first communication device during reception of the data frame and/or after reception of the data frame is completed.

In a third aspect, an embodiment of the present disclosure provides a communication apparatus, including:
a transceiver module, configured to receive a data frame after negotiating with a second communication device to establish a block acknowledgement (BA) mechanism;
where the transceiver module is configured to send a first radio frame, and the first radio frame is used to indicate a state of in-device coexistence of the first communication device during reception of the data frame and/or after reception of the data frame is completed.

In a fourth aspect, an embodiment of the present disclosure provides a communication apparatus, including:
a transceiver module, configured to send a data frame after negotiating with a first communication device to establish a BA mechanism;
where the transceiver module is configured to receive a first radio frame, and the first radio frame is used to indicate a state of in-device coexistence of the first communication device during reception of the data frame and/or after reception of the data frame is completed.

In a fifth aspect, an embodiment of the present disclosure provides a communication device, including one or more processors;
where when the above-mentioned communication device serves as the first communication device, the above-mentioned processor is configured to execute the communication method provided by the first aspect of the embodiment of the present disclosure; when the above-mentioned communication device serves as the second communication device, the above-mentioned processor is configured to execute the communication method provided by the second aspect of the embodiment of the present disclosure.

In a sixth aspect, an embodiment of the present disclosure provides a storage medium storing instructions. When the instructions are executed on a communication device, the communication device executes the communication method provided in the first aspect or the second aspect of the embodiments of the present disclosure.

In a seventh aspect, an embodiment of the present disclosure provides a communication system, which includes a first communication device and a second communication device; where the first communication device is configured to execute the method described in the first aspect, and the second communication device is configured to execute the method described in the second aspect.

In an eighth aspect, an embodiment of the present disclosure provides a computer program product, which includes a computer program. When the computer program is executed by a processor, it implements the method described in the first aspect, or implements the method described in the second aspect.

Based on the communication method, device and storage medium provided by the embodiments of the present disclosure, in the case that the first communication device and the second communication device have negotiated to establish a block acknowledgment (BA) mechanism and the second communication device starts to send a data frame to the first communication device, a method for indicating the state of in-device coexistence during the reception of the data frame or after the reception of the data frame is completed can be provided to the first communication device.

Additional aspects and advantages of the embodiments of the present disclosure are given in part in the following description, which may become apparent from the following description or be learned through practice of the present disclosure.

### BRIEF DESCRIPTION OF THE DRAWINGS

In order to more clearly illustrate the technical solutions of the embodiments of the present disclosure, the following briefly introduces the drawings required for describing the embodiments of the present disclosure. Obviously, the drawings described below are only some embodiments of the present disclosure, and for those skilled in the art, other drawings can be obtained based on these drawings without any creative work.
FIG. 1 is a schematic diagram of an architecture of a communication system according to an embodiment of the present disclosure;
FIG. 2a is a first interactive schematic diagram of the communication method according to an embodiment of the present disclosure;
FIG. 2b is a second interactive schematic diagram of the communication method according to an embodiment of the present disclosure;
FIG. 3 is a first flowchart of a communication method according to an embodiment of the present disclosure;
FIG. 4 is a second flowchart of a communication method according to an embodiment of the present disclosure;
FIG. 5 is a first structural schematic diagram of a communication apparatus according to an embodiment of the present disclosure;
FIG. 6 is a second structural schematic diagram of a communication apparatus according to an embodiment of the present disclosure;
FIG. 7 is a structural schematic diagram of a communication device provided in an embodiment of the present disclosure; and
FIG. 8 is a structural schematic diagram of a chip provided in an embodiment of the present disclosure.

### DETAILED DESCRIPTION

The embodiments of the present disclosure provide a communication method, a device, and a storage medium.

In a first aspect, an embodiment of the present disclosure provides a communication method, which is applied to a first communication device and includes:
receiving a data frame after negotiating with a second communication device to establish a block acknowledgement (BA) mechanism; and
sending a first radio frame, where the first radio frame is used to indicate a state of in-device coexistence of the first communication device during reception of the data frame and/or after reception of the data frame is completed.

In the above embodiment, the first communication device can receive the data frame sent by the second communication device after negotiating with the second communication device to establish a BA mechanism, and can actively indicate the state of in-device coexistence of the first communication device during the reception of the data frame and/or after completing the reception of the data frame through the first radio frame, so that the second communication device controls the sending of the data frame according to the state of the in-device coexistence of the first communication device, thereby avoiding the transmission of the data frame from being interfered with by the in-device coexistence of the first communication device, which affects the transmission quality of the data frame.

In combination with some embodiments of the first aspect, in some embodiments, sending the first radio frame includes at least one of the following:
sending the first radio frame when the in-device coexistence exists during reception of the data frame;
sending the first radio frame after receiving a second radio frame, where the second radio frame is used to request the first communication device to perform BA feedback, and the second radio frame includes a BA request frame or a multi-user BA request frame.

In the above embodiment, the first communication device can send the first radio frame when there is in-device coexistence during the reception of the data frame, or can send the first radio frame after completing the reception of the data frame and receiving the second radio frame, which is conducive to improving the indication mechanism of the state of in-device coexistence of the first radio frame during the reception of the data frame and/or after completing the reception of the data frame.

In combination with some embodiments of the first aspect, in some embodiments, the first radio frame includes a first identification bit. If the first radio frame is sent during the reception of the data frame, and the identification value of the first identification bit is a first value, the first radio frame is used to indicate that the in-device coexistence exists in the first communication device during the reception of the data frame;
if the first radio frame is sent after receiving the second radio frame, and the identification value of the first identification bit is the first value, the first radio frame is used to indicate that there is in-device coexistence in the first communication device after completing reception of the data frame; when the identification value of the first identification bit is a second value, the first radio frame is used to indicate that there is no in-device coexistence in the first communication device during reception of the data frame and after completing reception of the data frame.

In the above embodiment, if the first communication device sends a first radio frame during the reception of the data frame, the first radio frame can be used to promptly indicate that there is an in-device coexistence in the first communication device during the reception of the data frame, so that the second communication device can control the transmission of the data frame, thereby avoiding data frame loss and resource waste caused by interference with the transmission of the data frame arising from the in-device coexistence. After completing the reception of the data frame and after receiving the second radio frame for requesting BA feedback, the first communication device can indicate whether there is an in-device coexistence in the first communication device after completing the reception of the data frame while performing BA feedback through the first radio frame, which is beneficial for the device to associate subsequent data frame transmissions according to the in-device coexistence of the first communication device, thereby improving the efficiency of data frame transmission.

In combination with some embodiments of the first aspect, in some embodiments, when the identification value of the above-mentioned first identification bit is the first value, the above-mentioned first radio frame further includes a first identification field, and the above-mentioned first identification field is used to indicate a duration of the in-device coexistence existing in the above-mentioned first communication device.

In some embodiments, when there is the in-device coexistence, the first communication device can also indicate the duration of the in-device coexistence through the first identification field, which is beneficial for the second communication device to control the transmission of the data frame according to the duration of the in-device coexistence, thereby improving the transmission quality of the data frame and avoiding waste of resources.

In combination with some embodiments of the first aspect, in some embodiments, the above-mentioned first radio frame further includes a second identification field, and the above-mentioned second identification field is used to indicate the data frame reception state of the above-mentioned first communication device.

In some embodiments, in the presence of in-device coexistence, the first communication device can also indicate the data frame reception state through the second identification field, which is beneficial for the second communication device to quickly determine whether there is any unreceived data frame of the first communication device according to the second identification field, and then transmit the unreceived data frame to the first communication device in a timely manner to ensure the complete transmission of the data frame.

In combination with some embodiments of the first aspect, in some embodiments, in the case that the first communication device has the in-device coexistence, the method further includes at least one of the following:
suspending reception of the data frame for the duration of the in-device coexistence existing in the first communication device;
when the first communication device has an unreceived first data frame, receiving the first data frame after the duration of the in-device coexistence existing in the first communication device ends.

In the above embodiment, in the case that the in-device coexistence exists in the first communication device, receiving the data frame can be suspended for the duration of the in-device coexistence, thereby preventing the in-device coexistence from interfering with the reception of the data frame, and thus avoiding data frame loss and resource waste. Furthermore, in the case that the in-device coexistence exists in the first communication device, if an unreceived first data frame exists, the first data frame can be received again after the duration of the in-device coexistence expires, thereby effectively ensuring the reception integrity of the data frame and effectively preventing the in-device coexistence from interfering with transmission of the data frame for the duration, and thus improving communication quality.

In combination with some embodiments of the first aspect, in some embodiments, in the case that there is no in-device coexistence in the first communication device, the method further includes:
when the first communication device has an unreceived first data frame, receiving the first data frame.

In the above embodiment, in the case that there is no in-device coexistence in the first communication device, if there is an unreceived first data frame, the first communication device can receive the first data frame in a timely manner, thereby maintaining the reception integrity of the data frame and improving the reliability of data frame transmission.

In the second aspect, an embodiment of the present disclosure provides a communication method, which is applied to a second communication device and includes:
sending a data frame after negotiating with the first communication device to establish a BA mechanism; and
receiving a first radio frame, where the first radio frame is used to indicate a state of in-device coexistence of the first communication device during reception of the data frame and/or after reception of the data frame is completed.

In the above embodiment, the second communication device can send the data frame to the first communication device after negotiating with the first communication device to establish a BA mechanism, and can determine the state of in-device coexistence of the first communication device during the reception of the data frame and/or after completing the reception of the data frame through the first radio frame actively sent by the first communication device, so as to control the sending of the data frame according to the state of in-device coexistence of the first communication device, thereby avoiding the transmission of the data frame from being interfered with by the in-device coexistence of the first communication device, which affects the transmission quality of the data frame.

In combination with some embodiments of the second aspect, in some embodiments, receiving the first radio frame includes at least one of the following:
receiving the first radio frame during sending of the data frame;
receiving the first radio frame after sending a second radio frame, where the second radio frame is used to request the first communication device to perform BA feedback, and the second radio frame includes a BA request frame or a multi-user BA request frame.

In the above embodiment, the second communication device can receive the first radio frame in the case that there is in-device coexistence in the first communication device during the reception of the data frame, or can receive the first radio frame after the first communication device completes the reception of the data frame and receives the second radio frame, which is conducive to improving the indication mechanism of the state of in-device coexistence of the first radio frame during the reception of the data frame and/or after the completion of the reception of the data frame.

In combination with some embodiments of the second aspect, in some embodiments, the first radio frame includes a first identification bit. If the first radio frame is received during the sending of the data frame, and the identification value of the first identification bit is a first value, the first radio frame is used to indicate that the first communication device has the in-device coexistence during the reception of the data frame;
if the first radio frame is received after sending the second radio frame, and the identification value of the first identification bit is the first value, the first radio frame is used to indicate that there is in-device coexistence in the first communication device after completing reception of the data frame; when the identification value of the first identification bit is the second value, the first radio frame is used to indicate that there is no in-device coexistence in the first communication device during reception of the data frame and after completing reception of the data frame.

In the above embodiment, if the first communication device sends the first radio frame during the reception of the data frame, the first radio frame can be used to promptly indicate that there is an in-device coexistence in the first communication device during the reception of the data frame, so that the second communication device can control the transmission of the data frame, thereby avoiding data frame loss and resource waste caused by interference with the transmission of the data frame caused by the in-device coexistence. After completing the reception of the data frame and after receiving the second radio frame for requesting BA feedback, the first communication device can perform BA feedback through the first radio frame while indicating whether there is an in-device coexistence in the first communication device after completing the reception of the data frame, which is beneficial for the second communication device to associate subsequent data frame transmissions according to the in-device coexistence of the first communication device, thereby improving the transmission efficiency of data frame.

In combination with some embodiments of the second aspect, in some embodiments, when the identification value of the above-mentioned first identification bit is the first value, the above-mentioned first radio frame also includes a first identification field, and the above-mentioned first identification field is used to indicate a duration of the in-device coexistence existing in the above-mentioned first communication device.

In some embodiments, in the case that there is in-device coexistence in the first communication device, the second communication device can also determine the duration of the in-device coexistence of the first communication device through the first identification field, which is conducive to controlling the transmission of the data frame according to the duration of the in-device coexistence, thereby improving the transmission quality of the data frame and avoiding waste of resources.

In combination with some embodiments of the second aspect, in some embodiments, the first radio frame further includes a second identification field, and the second identification field is used to indicate the data frame reception state of the first communication device.

In some embodiments, in the case that there is in-device coexistence in the first communication device, the second communication device can also determine the data frame reception state of the first communication device through the second identification field, which is conducive to quickly determining whether there is a data frame unreceived by the first communication device according to the second identification field, and then timely transmitting the unreceived data frame to the first communication device to ensure the complete transmission of the data frame.

In combination with some embodiments of the second aspect, in some embodiments, in the case that the first communication device has in-device coexistence, the method further includes at least one of the following:
suspending sending of the data frame for the duration of the in-device coexistence existing in the first communication device;
when the first communication device has an unreceived first data frame, sending the first data frame after the duration of the in-device coexistence existing in the first communication device ends.

In the above embodiment, in the case that the in-device coexistence exists in the first communication device, the second communication device can suspend sending the data frame for the duration of the in-device coexistence, thereby preventing the in-device coexistence from interfering with the reception of the data frame, and thus avoiding data frame loss and resource waste. Furthermore, in the case that the in-device coexistence exists in the first communication device, if there is a first data frame unreceived by the first communication device, the second communication device can resend the first data frame after the duration of the in-device coexistence has expired, thereby effectively ensuring the reception integrity of the data frame and effectively preventing the in-device coexistence from interfering with the transmission of the data frame for the duration, and thus improving communication quality.

In combination with some embodiments of the second aspect, in some embodiments, in the case that there is no in-device coexistence in the first communication device, the method further includes:
when the first communication device has an unreceived first data frame, sending the first data frame.

In the above embodiment, in the case that there is no in-device coexistence in the first communication device, if there is a first data frame unreceived by the first communication device, the second communication device can send the first data frame to the first communication device in a timely manner, thereby maintaining the reception integrity of the data frame and improving the reliability of data frame transmission.

In the third aspect, an embodiment of the present disclosure provides a communication apparatus, including:
a transceiver module, configured to receive a data frame after negotiating with the second communication device to establish a block acknowledgement (BA) mechanism;
where the transceiver module is configured to send a first radio frame, and the first radio frame is configured to indicate a state of in-device coexistence of the first communication device during reception of the data frame and/or after the reception of the data frame is completed.

In the fourth aspect, an embodiment of the present disclosure provides a communication apparatus, including:
a transceiver module, configured to send a data frame after negotiating with the first communication device to establish a BA mechanism;
where the transceiver module is configured to receive a first radio frame, and the first radio frame is configured to indicate a state of in-device coexistence of the first communication device during reception of the data frame and/or after reception of the data frame is completed.

In the fifth aspect, an embodiment of the present disclosure provides a communication device, including one or more processors;
where when the above-mentioned communication device acts as the first communication device, the above-mentioned processor executes the communication method provided in the first aspect and the optional implementations of the first aspect, or when it acts as the second communication device, the above-mentioned processor executes the communication method provided in the second aspect and the optional implementations of the second aspect.

In the sixth aspect, an embodiment of the present disclosure provides a storage medium, which stores instructions. When the instructions are executed on a communication device, the communication device executes the method described in the first aspect, the second aspect, the optional implementations of the first aspect, and the optional implementations of the second aspect.

In the seventh aspect, an embodiment of the present disclosure provides a computer program product. When the computer program product is executed by a processor, the processor executes the method described in the first aspect, the second aspect, the optional implementations of the first aspect, and the optional implementations of the second aspect.

In the eighth aspect, an embodiment of the present disclosure provides a computer program, which, when executed on a computer, enables the computer to execute the method described in the first aspect, the second aspect, the optional implementations of the first aspect, and the optional implementations of the second aspect.

In the ninth aspect, an embodiment of the present disclosure provides a chip or a chip system, where the chip or chip system includes a processing circuit configured to execute the method described in the first aspect, the second aspect, the optional implementations of the first aspect, and the optional implementations of the second aspect.

In the tenth aspect, an embodiment of the present disclosure provides a communication system, which includes the first communication device and the second communication device; where the first communication device is configured to execute the method described in the first aspect and the optional implementations of the first aspect, and the second communication device is configured to execute the method described in the second aspect and the optional implementations of the second aspect.

It is understandable that the first communication device, the second communication device, the communication system, the communication device, the storage medium, the program product, the computer program, the chip, or the chip system described above are all used to perform the methods provided in the embodiments of the present disclosure. Therefore, the beneficial effects that can be achieved can refer to the beneficial effects of the corresponding methods and will not be repeated here.

The embodiments of the present disclosure provide a communication method, device, and storage medium. In some embodiments, the terms "communication method" and "information processing method" are interchangeable, the terms "communication apparatus" and "information processing apparatus" are interchangeable, and the terms "information processing system" and "communication system" are interchangeable.

The embodiments of the present disclosure are not exhaustive, but are merely illustrative of some embodiments and are not intended to limit the scope of protection of the present disclosure. In case of no conflict, each step in a certain embodiment can be implemented as an independent embodiment, and the steps can be arbitrarily combined. For example, a solution after removing some steps in a certain embodiment can also be implemented as an independent embodiment, and the order of the steps in a certain embodiment can be arbitrarily exchanged. In addition, the optional implementations in a certain embodiment can be arbitrarily combined. In addition, the embodiments can be arbitrarily combined. For example, some or all steps of different embodiments can be arbitrarily combined, and a certain embodiment can be arbitrarily combined with the optional implementations of other embodiments.

In individual embodiments of the present disclosure, unless otherwise specified or logically conflicting, the terms and/or descriptions between the embodiments are consistent and can be referenced by each other. The technical features in different embodiments can be combined to form a new embodiment according to their inherent logical relationships.

The terms used in the embodiments of the present disclosure are only for the purpose of describing specific embodiments and are not intended to limit the present disclosure.

In the embodiments of the present disclosure, unless otherwise specified, elements expressed in the singular, such as "one", "a/an", "the", "the above-mentioned", "the above-described", "the foregoing", "this", etc., may mean "one and only one", or "one or more", "at least one", etc. For example, when using articles such as "a", "an", "the" in English in translation, the noun following the article may be understood as a singular expression or a plural expression.

In the embodiments of the present disclosure, "a plurality of" refers to two or more.

In some embodiments, the terms "at least one of", "one or more", "a plurality of", "multiple", etc. can be used interchangeably.

In some embodiments, descriptions such as "at least one of A and B," "A and/or B," "A in one case, B in another case," or "in response to one case, A, in response to another case, B" may include the following technical solutions depending on the situation: in some embodiments, A (A is executed independently of B); in some embodiments, B (B is executed independently of A); in some embodiments, execution is selected from A and B (A and B are selectively executed); and in some embodiments, A and B (both A and B are executed). The above is also applicable when there are more branches such as A, B, and C, etc.

In some embodiments, "A or B" and other descriptions may include the following technical solutions depending on the situation: in some embodiments, A (A is executed independently of B); in some embodiments, B (B is executed independently of A); in some embodiments, execution is selected from A and B (A and B are selectively executed). The above is also applicable when there are more branches such as A, B, C, etc.

The prefixes such as "first" and "second" in the embodiments of the present disclosure are only used to distinguish different description objects and do not constitute any restriction on the position, order, priority, quantity or content of the description objects. For the statement of the description object, the description in the context of the claims or embodiments is referred to, and no unnecessary restriction should be constituted due to the use of prefixes. For example, if the description object is a "field", the ordinal number before the "field" in the "first field" and the "second field" does not limit the position or order between the "fields". "First" and "second" do not limit whether the "fields" they modify are in the same message, nor do they limit the order of the "first field" and the "second field". For another example, if the description object is a "level", the ordinal number before the "level" in the "first level" and the "second level" does not limit the priority between the "levels". For another example, the number of description objects is not limited by the ordinal number and can be one or more. Taking "first apparatus" as an example, the number of "apparatuses" can be one or more. In addition, the objects modified by different prefixes can be the same or different. For example, if the description object is "apparatus", then the "first apparatus" and the "second apparatus" can be the same apparatus or different apparatuses, and their types can be the same or different; for another example, if the description object is "information", then the "first information" and the "second information" can be the same information or different information, and their contents can be the same or different.

In some embodiments, "including A," "containing A," "used to indicate A," and "carrying A" can be interpreted as directly carrying A or indirectly indicating A.

In some embodiments, terms such as "in response to...", "in response to determining...", "in the case of...", "at the time of...", "when...", "if...", "in case of...", etc. can be used interchangeably.

In some embodiments, terms such as "greater than", "greater than or equal to", "not less than", "more than", "more than or equal to", "not less than", "higher than", "higher than or equal to", "not less than", and "above" can be replaced with each other, and terms such as "less than", "less than or equal to", "not greater than", "less than", "less than or equal to", "not more than", "lower than", "lower than or equal to", "not higher than", and "below" can be replaced with each other.

In some embodiments, obtaining data, information, etc. may comply with the laws and regulations of the country where the data is obtained.

In some embodiments, data, information, etc. may be obtained with the user's consent.

In addition, each element, each row, or each column in the table of the embodiments of the present disclosure can be implemented as an independent embodiment, and the combination of any elements, any rows, and any columns can also be implemented as an independent embodiment.

With the development of wireless communication technology, the integration of terminal devices is becoming increasingly higher. One terminal device often supports multiple wireless communication protocols, integrates multiple wireless communication modules and simultaneously accesses multiple wireless networks, such as Wireless Local Area Networks (WLAN), Long Term Evolution (LTE) system, Bluetooth (BT) and Global Navigation Satellite System (GNSS).

The simultaneous communication of multiple communication modes means that there is in-device coexistence (IDC) in the communication device. At this time, the multiple communication modes may interfere with each other, resulting in communication failure or performance loss.

For example, when the communication frequency bands of different communication systems are adjacent, the sending operation of one communication system may interfere with the reception operation of another communication system. As an example, Wi-Fi is adjacent to LTW Band 40, LTE Band 7, etc. When the frequency component falls into the adjacent channel operating band, it may cause communication interference in the adjacent channel. In addition, when multiple wireless communication modules exist at the same time, the physical gap between the radio frequency (RF) modules of the communication modules is relatively small, and when working at the same time, there is an interference in communications between the communication systems, which affects the sending and reception of respective communication modules.

For example, both Wi-Fi and BT operate in the 2.4GHz frequency band, and in most communication devices, Wi-Fi module and BT module share the antenna. Therefore, mutual interference between Wi-Fi and BT communications also occurs. Furthermore, as the bandwidth of wireless communication systems increases and becomes increasingly abundant, the problem of interference between multiple wireless communications within the device becomes increasingly severe, reducing the reliability of data transmission between the devices. Therefore, how to effectively managing the in-device coexistence within a single device and avoiding the communication interference caused by the in-device coexistence has become an urgent issue.

To address the above problem, the following will further describe the technical solutions in the embodiments of the present disclosure in a clear and complete manner with reference to the accompanying drawings. Obviously, the described embodiments are only part of the embodiments of the present disclosure and do not constitute all the embodiments. All other embodiments obtained by persons of ordinary skill in the art based on the embodiments of the present disclosure without creative effort shall fall within the scope of protection of the present disclosure.

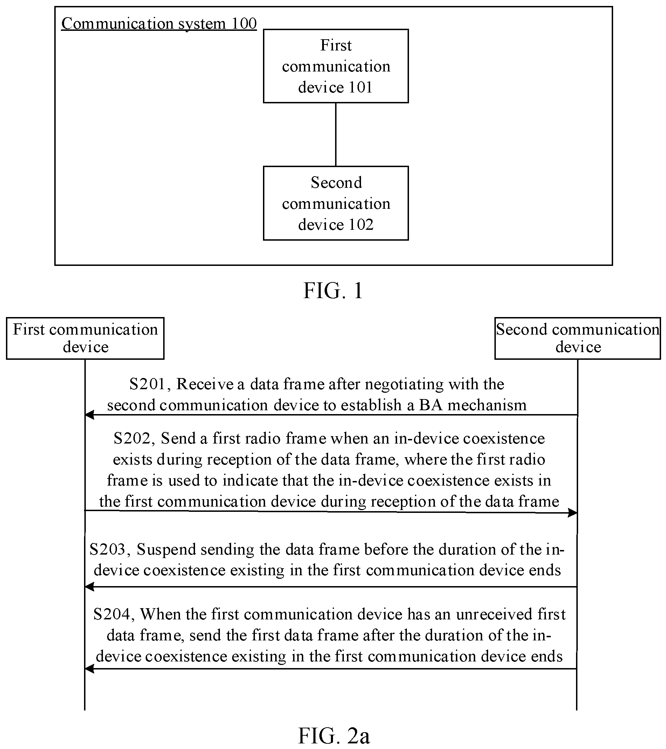

FIG. 1 is a schematic diagram showing an architecture of a communication system according to an embodiment of the present disclosure.

As shown in FIG. 1, a communication system 100 includes a first communication device 101 and a second communication device 102.

Any one of the first communication device 101 and the second communication device 102 can be an independent AP or an affiliated AP of an access point device supporting multi-link (Access Point Multilink Device, AP MLD), and the other can be an independent STA or an affiliated STA of a station device supporting multi-link (Non-Access Point Multilink Device, Non-AP MLD), which is not restricted here.

In some embodiments, the first communication device 101 and the second communication device 102 may be terminal devices or network devices with Wi-Fi chips.

In some embodiments, the first communication device and the second communication device can be the responder and the initiator of the BA mechanism, respectively. For example, the first communication device can be called the Recipient STA and the second communication device can be called the Originating STA.

It can be understood that the communication system described in the embodiments of the present disclosure is for the purpose of more clearly illustrating the technical solutions of the embodiments of the present disclosure, and does not constitute a limitation on the technical solutions provided in the embodiments of the present disclosure. The person skilled in the art can know that with the evolution of the system architecture and the emergence of new service scenarios, the technical solutions provided in the embodiments of the present disclosure are also applicable to similar technical problems.

The following embodiments of the present disclosure can be applied to the communication system 100 shown in FIG. 1, or a part thereof, but are not limited thereto. The entities shown in FIG. 1 are illustrative only. The communication system can include all or a part of the entities shown in FIG. 1, or may include other entities outside of FIG. 1. The number and form of the entities are arbitrary, and the entities can be physical or virtual. The link relationships between the entities are illustrative only. The entities can be linked or unlinked, and the links can be of any type, including direct or indirect, wired or wireless.

The various embodiments of the present disclosure may be applied to the wireless local area network (WLAN), such as IEEE 802.11 system standards, such as 802.11a/b/g standard, 802.11n standard, 802.11ac standard, 802.11ax standard, 802.11bf standard, 802.11be standard, or their next generations, such as 802.11bn standard. Alternatively, the various embodiments of the present disclosure may also be applied to wireless local area network systems, such as internet of things (IoT) networks or vehicle-to-everything (V2X) networks. The embodiments of the present disclosure can also be applied to other possible communication systems, such as long term evolution (LTE) system, LTE frequency division duplex (FDD) system, LTE time division duplex (TDD) system, universal mobile telecommunication system (UMTS), world-wide interoperability for microwave access (WiMAX) communication system, and fifth generation (5G) communication system.

FIG. 2a is a first interactive schematic diagram of the communication method shown in the embodiment of the present disclosure. The communication method shown in FIG. 2a includes the following steps.

In S201, the first communication device receives a data frame after negotiating with the second communication device to establish a BA mechanism.

In some embodiments, the first communication device and the second communication device can respectively serve as the responder and initiator of the BA mechanism to negotiate the BA mechanism. For example, the first communication device can be called the Recipient STA, and the second communication device can be called the Originating STA.

Specifically, when the second communication device and the first communication device are negotiating the BA mechanism, the second communication device can send an Add Block Acknowledgment (ADDBA) request frame to the first communication device to request to negotiate with the first communication device to establish the BA mechanism.

Furthermore, after receiving the ADDBA request frame, the first communication device can send an ADDBA response frame to the second communication device to instruct the establishment of a BA mechanism.

In some embodiments, after the first communication device and the second communication device negotiate to establish a BA mechanism, the second communication device can send at least one data frame to the first communication device, and the first communication device receives the data frame sent by the second communication device after negotiating to establish a BA mechanism with the second communication device.

In S202, the first communication device sends a first radio frame when an in-device coexistence exists during reception of the data frame, where the first radio frame is used to indicate that the in-device coexistence exists in the first communication device during reception of the data frame.

In some embodiments, the first communication device can determine in real time whether there is an in-device coexistence in the first communication device during the process of receiving the data frame sent by the second communication device.

When there is an in-device coexistence in the first communication device during the reception of the data frame, the first communication device can send a first radio frame to the second communication device.

The first radio frame is used to indicate that there is in-device coexistence in the first communication device during the reception of the data frame.

Optionally, the first radio frame includes a first identification bit, and the identification value of the first identification bit is a first value. In the case that the identification value of the first identification bit is the first value, the first radio frame is used to indicate that the in-device coexistence exists in the first communication device during the reception of the data frame.

The first value may be 1 or other values, which are not limited here.

In some embodiments, the first radio frame may be a BA frame.

In some embodiments, the first radio frame is a BA frame, and the first radio frame includes a BA control field.

As an example, the format of the BA Control field in the first radio frame may be as follows:

| | | | | | |
|---|---|---|---|---|---|
| Reserved | BA Type | IDC Activities Existence | Reserved | ... | TID_INFO |

The BA Control field includes the IDC Activities Existence field, and the IDC Activities Existence field is the first identification bit.

When the first communication device sends the first radio frame during the reception of the data frame, and the identification value of the IDC Activities Existence field is the first value, the first radio frame is used to indicate that there is an in-device coexistence in the first communication device during the reception of the data frame.

In S203, the second communication device suspends sending the data frame before the duration of the in-device coexistence existing in the first communication device ends.

In some embodiments, if the second communication device receives the first radio frame while sending a data frame to the first communication device, the second communication device can determine that the first radio frame indicates that the first communication device has IDC activity during reception of the data frame.

Optionally, when the first radio frame includes a first identification bit, if the second communication device receives the first radio frame while sending a data frame to the first communication device, and the identification value of the first identification bit is the first value, the second communication device can determine that there is in-device coexistence in the first communication device during the reception of the data frame.

In some embodiments, upon determining that the first communication device has in-device coexistence during reception of data frame, the second communication device can suspend sending the data frame to the first communication device for the duration of the in-device coexistence existing in the first communication device.

In some embodiments, when the first radio frame is used to indicate that the first communication device has in-device coexistence during the reception of the data frame, the first radio frame also includes a first identification field, and the first identification field is used to indicate the duration of the in-device coexistence existing in the first communication device.

Optionally, the first radio frame includes a first identification bit, when the first communication device sends the first radio frame in the case that there is an in-device coexistence during the reception of the data frame and the identification value of the first identification bit is a first value, the first radio frame is used to indicate that there is an in-device coexistence existing in the first communication device during the reception of the data frame. At this time, the first radio frame also includes a first identification field, and the first identification field is used to indicate the duration of the in-device coexistence existing in the first communication device.

In some embodiments, the first radio frame is a BA frame, and the first radio frame includes a BA information field.

As an example, the format of the BA Information field in the first radio frame may be as follows:

| | | | |
|---|---|---|---|
| AID TID Info | Block Ack Starting Sequence Control | Block Ack Bitmap | IDC Activities Duration |

The BA Information field includes the in-device coexistence duration (IDC Activities Duration) field, and the IDC Activities Duration field is the first identification field.

When the first communication device sends a first radio frame during the reception of the data frame, the first radio frame is used to indicate that the first communication device has an in-device coexistence during the reception of the data frame (for example, the identification value of the first identification bit is the first value), and the IDC Activities Duration field is used to indicate the duration of the in-device coexistence existing in the first communication device.

As an example, the second communication device receives a first radio frame while sending a data frame to the first communication device, and then the second communication device can determine that the first communication device has the in-device coexistence during the reception of the data frame and can determine the duration of the in-device coexistence in the first communication device according to the first identification field in the first radio frame. In this case, the second communication device can suspend sending the data frame to the first communication device for the duration of the in-device coexistence in the first communication device.

In S204, when the first communication device has an unreceived first data frame, the second communication device sends the first data frame after the duration of the in-device coexistence existing in the first communication device ends.

In some embodiments, if the second communication device receives a first radio frame while sending a data frame to the first communication device, the second communication device determines that the first communication device has the in-device coexistence during the reception of the data frame. In this case, if there is a first data frame not received by the first communication device, the second communication device can send the first data frame to the first communication device after the duration of the in-device coexistence of the first communication device expires.

The first data frame may include a data frame that the first communication device has not received before sending the first radio frame, and a data frame that the second communication device has not sent to the first communication device when receiving the first radio frame.

In some embodiments, the first radio frame includes a second identification field, and the second identification field is used to indicate a reception state of the data frame of the first communication device.

After receiving the first radio frame, the second communication device can determine the data frame reception state of the first communication device according to the second identification field in the first radio frame, and further determine whether the first communication device has any unreceived first data frame.

In some embodiments, the first radio frame may be a BA frame, the first radio frame includes a block acknowledgment bitmap (Block Ack Bitmap) field, the Block Ack Bitmap field includes at least one bit, each bit corresponds to one data frame, and the Block Ack Bitmap field is the second identification field.

Specifically, if the n-th bit of the Block Ack Bitmap field is the third value, it indicates that the first communication device has received a data frame with a sequence number SN and a fragment number FN, for example, a media access control protocol data unit (MAC Protocol Data Unit, MPDU) with a sequence number SN and a fragment number FN. n = 4 × (SN - SSN) + FN, SSN is the value of the starting sequence number subfield of the Block Ack Starting Sequence Control subfield, and a modulo 4096 operation is performed on the sequence number. If the n-th bit of the Block Ack Bitmap field is the fourth value, it indicates that the first communication device has not received the corresponding data frame.

The third value and the fourth value are different values, for example, the third value is 1 and the fourth value is 0, which is not limited here.

In this case, after receiving the first radio frame, the second communication device can determine whether the first communication device has any unreceived first data frame according to the Block Ack Bitmap field, and in the case that the first communication device has any unreceived first data frame, the second communication device sends the first data frame to the first communication device after the duration of the in-device coexistence existing in the first communication device ends.

The communication method involved in the embodiments of the present disclosure may include at least one of the aforementioned steps and embodiments. For example, any one of steps S201 to S204 may be implemented as an independent embodiment, steps S201 to S203 may be implemented as an independent embodiment, steps S201, S202, and S204 may be implemented as independent embodiments, and steps S201 to S204 may be implemented as independent embodiments, but are not limited thereto.

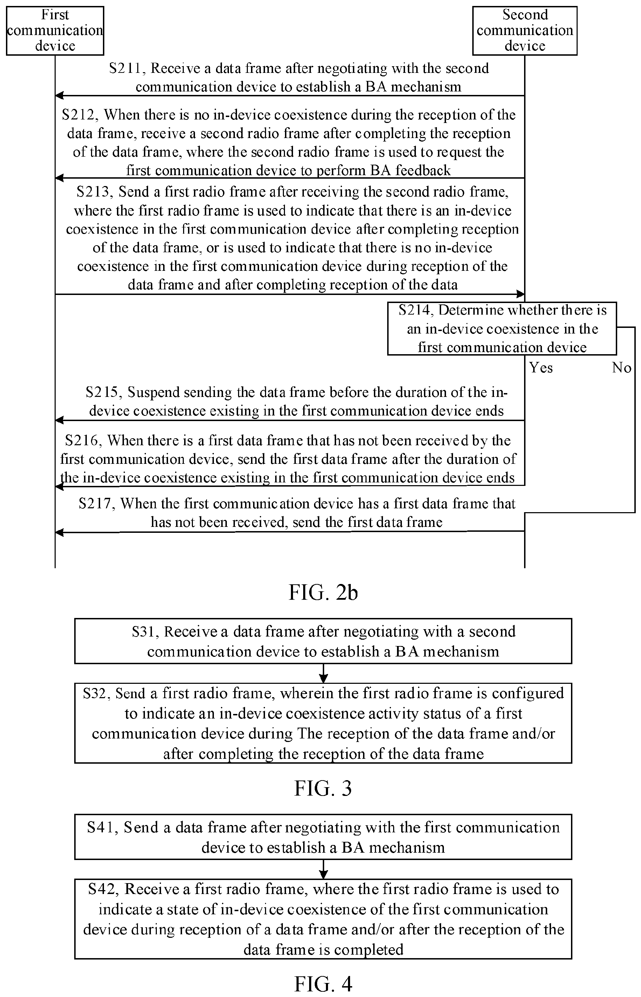

FIG. 2b is a second interactive schematic diagram of a communication method shown in an embodiment of the present disclosure. The communication method shown in FIG. 2b includes the following steps.

In S211, the first communication device receives a data frame after negotiating with the second communication device to establish a BA mechanism.

In some embodiments, the first communication device and the second communication device can respectively serve as the responder and initiator of the BA mechanism to negotiate the BA mechanism. For example, the first communication device can be called the Recipient STA, and the second communication device can be called the Originating STA.

Specifically, when the second communication device and the first communication device are negotiating the BA mechanism, the second communication device may send an ADDBA request frame to the first communication device to request to negotiate with the first communication device to establish the BA mechanism.

Furthermore, after receiving the ADDBA request frame, the first communication device can send an ADDBA response frame to the second communication device to instruct the establishment of a BA mechanism.

In some embodiments, after the first communication device and the second communication device negotiate to establish a BA mechanism, the second communication device can send at least one data frame to the first communication device, and the first communication device receives the data frame sent by the second communication device after negotiating to establish a BA mechanism with the second communication device.

In S212, when there is no in-device coexistence during the reception of the data frame, the first communication device receives a second radio frame after completing the reception of the data frame, where the second radio frame is used to request the first communication device to perform BA feedback.

In some embodiments, while receiving a data frame sent by the second communication device, the first communication device can determine in real time whether there is in-device coexistence in the first communication device. If there is no in-device coexistence in the first communication device during reception of the data frame, the first communication device can receive a second radio frame sent by the second communication device after completing reception of the data frame.

The second radio frame is used to request the first communication device to perform BA feedback.

Optionally, the second radio frame includes a BA request frame or a multi-user block acknowledgment request frame.

After confirming that the reception of the data frame is completed, the first communication device can send a BA frame to the second communication device to confirm the transmission status of the data frame.

In S213, the first communication device sends a first radio frame after receiving the second radio frame, where the first radio frame is used to indicate that there is an in-device coexistence in the first communication device after completing reception of the data frame, or is used to indicate that there is no in-device coexistence in the first communication device during reception of the data frame and after completing reception of the data frame.

In some embodiments, the first communication device can send the first radio frame to the second communication device after receiving the second radio frame.

The first radio frame is used to indicate at least one of the following:
the first communication device has an in-device coexistence after completing reception of the data frame;
there is no in-device coexistence in the first communication device during reception of the data frame and after completing the reception of the data frame.

In some embodiments, the first radio frame includes a first identification bit, and when the identification value of the first identification bit is a first value, the first radio frame is used to indicate that there is an in-device coexistence in the first communication device after completing the reception of the data frame; when the identification value of the first identification bit is a second value, the first radio frame is used to indicate that there is no in-device coexistence in the first communication device during the reception of the data frame and after the reception of the data frame is completed.

The first value and the second value are different values. For example, the first value may be 1 and the second value may be 0, which is not limited here.

In some embodiments, the first radio frame may be a BA frame.

In some embodiments, the first radio frame is a BA frame, and the first radio frame includes a BA Control field.

As an example, the format of the BA Control field in the first radio frame may be as follows:

| | | | | | |
|---|---|---|---|---|---|
| Reserved | BA Type | IDC Activities Existence | Reserved | ... | TID_INFO |

The BA Control field includes the in-device coexistence existence (IDC Activities Existence) field, and the IDC Activities Existence field is the first identification bit.

If the first communication device sends the first radio frame after receiving the second radio frame, and the identification value of the IDC Activities Existence field is the first value, the first radio frame is used to indicate that the first communication device has an in-device coexistence after completing the reception of the data frame; when the identification value of the IDC Activities Existence field is the second value, the first radio frame is used to indicate that the first communication device has no in-device coexistence during the reception of the data frame and after completing the reception of the data frame.

In S214, the second communication device determines whether there is an in-device coexistence in the first communication device.

In some embodiments, if the second communication device receives the first radio frame after sending the second radio frame to the first communication device, the second communication device can determine the state of in-device coexistence of the first communication device during the reception of the data frame and/or after completing the reception of the data frame.

Optionally, the first radio frame includes a first identification bit, and when the identification value of the first identification bit is a first value, the second communication device can determine that there is an in-device coexistence in the first communication device after completing the reception of the data frame; when the identification value of the second identification bit is a second value, the second communication device can determine that there is no in-device coexistence in the first communication device during the reception of the data frame and/or after completing the reception of the data frame.

In some embodiments, if the second communication device determines that there is in-device coexistence in the first communication device, such as determining that there is in-device coexistence in the first communication device after completing the reception of the data frame, step S215 is executed; if the second communication device determines that there is no in-device coexistence in the first communication device, such as determining that there is no in-device coexistence in the first communication device during the reception of the data frame and after completing the reception of the data frame, step S217 is executed.

In S215, the second communication device suspends sending the data frame before the duration of the in-device coexistence existing in the first communication device ends.

In some embodiments, when it is determined that the first communication device has in-device coexistence after completing reception of the data frame, the second communication device can suspend sending the data frame to the first communication device for the duration of the in-device coexistence of the first communication device.

In some embodiments, when the first radio frame is used to indicate that there is in-device coexistence in the first communication device after completing reception of the data frame, the first radio frame also includes a first identification field, and the first identification field is used to indicate the duration of the in-device coexistence in the first communication device.

Optionally, the first radio frame includes a first identification bit, and when the first communication device sends the first radio frame after receiving the second radio frame, and the identification value of the first identification bit is a first value, the first radio frame is used to indicate that there is an in-device coexistence in the first communication device after completing reception of the data frame. In this case, the first radio frame also includes a first identification field, and the first identification field is used to indicate the duration of the in-device coexistence in the first communication device.

In some embodiments, the first radio frame is a BA frame, and the first radio frame includes a BA Information field.

As an example, the format of the BA Information field in the first radio frame may be as follows:

| | | | |
|---|---|---|---|
| AID TID Info | Block Ack Starting Sequence Control | Block Ack Bitmap | IDC Activities Duration |

The BA Information field includes the in-device coexistence duration (IDC Activities Duration) field, and the IDC Activities Duration field is the first identification field.

When the first communication device sends the first radio frame after receiving the second radio frame, and the first radio frame is used to indicate that there is an in-device coexistence in the first communication device after completing reception of the data frame (such as the identification value of the first identification bit is the first value), the IDC Activities Duration field is used to indicate the duration of the in-device coexistence existing in the first communication device.

As an example, the second communication device receives a first radio frame after sending a second radio frame to the first communication device, and can determine whether the first communication device has an in-device coexistence after completing the reception of the data frame according to the identification value of the first identification bit. In the case that it is determined that the first communication device has an in-device coexistence after completing the reception of the data frame, the duration of the in-device coexistence of the first communication device can be determined according to the first identification field in the first radio frame. In this case, the second communication device can suspend sending the data frame to the first communication device for the duration of the in-device coexistence existing in the first communication device.

In S216, when there is a first data frame that has not been received by the first communication device, the second communication device sends the first data frame after the duration of the in-device coexistence existing in the first communication device ends.

In some embodiments, if the second communication device receives the first radio frame after sending the second radio frame to the first communication device, and it is determined according to the first radio frame that there is an in-device coexistence in the first communication device after completing receiving the data frame, in this case, when the first communication device has an unreceived first data frame, the second communication device can send the first data frame to the first communication device after the duration of the in-device coexistence existing in the first communication device expires.

The first data frame may include a data frame that the first communication device has not received before sending the first radio frame, and a data frame that the second communication device has not sent to the first communication device when receiving the first radio frame.

In some embodiments, the first radio frame includes a second identification field, and the second identification field is used to indicate a data frame reception state of the first communication device.

After receiving the first radio frame, the second communication device can determine the data frame reception state of the first communication device according to the second identification field in the first radio frame, and further determine whether the first communication device has any unreceived first data frame.

In some embodiments, the first radio frame can be a BA frame, the first radio frame includes a Block Ack Bitmap field, the Block Ack Bitmap field includes at least one bit, each bit corresponds to one data frame, and the Block Ack Bitmap field is a second identification field.

Specifically, if the n-th bit of the Block Ack Bitmap field is the third value, it indicates that the first communication device has received a data frame with a sequence number SN and a fragment number FN, for example, a media access control protocol data unit (MAC Protocol Data Unit, MPDU) with a sequence number SN and a fragment number FN. n = 4 × (SN - SSN) + FN, SSN is the value of the starting sequence number subfield of the Block Ack Start Sequence Control subfield, and a modulo 4096 operation is performed on the sequence number. If the n-th bit of the Block Ack Bitmap field is the fourth value, it indicates that the first communication device has not received the corresponding data frame.

The third value and the fourth value are different values, for example, the third value is 1 and the fourth value is 0, which is not limited here.

In this case, after receiving the first radio frame, the second communication device can determine whether the first communication device has any unreceived first data frame according to the Block Ack Bitmap field, and if the first communication device has any unreceived first data frame, the second communication device sends the first data frame to the first communication device after the duration of the in-device coexistence existing in the first communication device ends.

In S217, when the first communication device has a first data frame that has not been received, the second communication device sends the first data frame.

In some embodiments, if the second communication device receives a first radio frame after sending a second radio frame to the first communication device, and determines according to the first radio frame that there is no in-device coexistence in the first communication device during the reception of the data frame and after the reception of the data frame is completed, the second communication device can determine whether the first communication device has an unreceived first data frame (see step S216 for the specific implementation).

When it is determined that the first communication device has not received the first data frame, the second communication device can directly send the first data frame to the first communication device after receiving the first radio frame. When it is determined that the first communication device has no unreceived first data frame, the second communication device can continue to send other data frames to the first communication device.

The communication method involved in the embodiments of the present disclosure may include at least one of the aforementioned steps and embodiments. For example, any one of steps S211 to S217 may be implemented as an independent embodiment, steps S211 to S216 may be implemented as an independent embodiment, steps S211 to S214 and step S217 may be implemented as independent embodiments, and steps S211 to S217 may be implemented as an independent embodiment, but are not limited thereto.

The communication method provided by the embodiments of the present disclosure is further described below with reference to examples.

After the first communication device negotiates with the second communication device to establish a BA mechanism, the second communication device sends a data frame to the first communication device.

### Case 1:

When the first communication device has an in-device coexistence during reception of a data frame, the first communication device can send a BA frame to the second communication device.

The BA frame includes a first identification bit, and the identification value of the first identification bit is a first value, which is used to indicate that there is in-device coexistence in the first communication device during the reception of the data frame.

The BA frame includes a first identification field and a second identification field, the first identification field is used to indicate the duration of the in-device coexistence, and the second identification field is used to indicate the data frame reception state of the first communication device.

In this case, the second communication device suspends sending the data frame to the first communication device during the duration of the in-device coexistence of the first communication device. When the second communication device determines, according to the second identification field, that the first communication device has an unreceived data frame, the second communication device sends the previously unreceived data frame to the first communication device after the duration of the in-device coexistence of the first communication device.

### Case 2:

When there is no in-device coexistence during the process of the first communication device receiving a data frame, the first communication device can receive a BA request frame or an MU-BAR frame sent by the second communication device, and send a BA frame to the second communication device after receiving the BA request frame or the MU-BAR frame.

The BA frame includes a first identification bit. When the first communication device has in-device coexistence after completing the reception of the data frame, the identification value of the first identification bit is a first value, which is used to indicate that the first communication device has in-device coexistence after completing the reception of the data frame. When there is no in-device coexistence in the first communication device after completing receiving the data frame, the identification value of the first identification bit is the second value, which is used to indicate that there is no in-device coexistence in the first communication device during the process of receiving the data frame and after completing receiving the data frame.

When the identification value of the first identification bit is the first value, the BA frame further includes a first identification field, and the first identification field is used to indicate the duration of the in-device coexistence.

The BA frame further includes a second identification field, and the second identification field is used to indicate the data frame reception state of the first communication device.

In this case, after the second communication device receives the BA frame, if the first identification field is the first value, it is determined that the first communication device has an in-device coexistence after completing reception of the data frame. The second communication device then suspends sending the data frame to the first communication device for the duration of the in-device coexistence of the first communication device, and when it is determined according to the second identification field that the first communication device has an unreceived data frame, the second communication device sends the previously unreceived data frame to the first communication device after the duration of the in-device coexistence of the first communication device.

After the second communication device receives the BA frame, if the first identification bit is the second value, it determines that no in-device coexistence existing in the first communication device during and after receiving the data frame. Furthermore, when the second communication device determines, according to the second identification field, that the first communication device has an unreceived data frame, the second communication device sends the previously unreceived data frame to the first communication device after receiving the BA frame.

FIG. 3 is a flowchart of a communication method according to an embodiment of the present disclosure. As shown in FIG. 3, the method is executed by the first communication device, and the method includes the following steps.

In S31, a data frame is received after negotiating with the second communication device to establish a BA mechanism.

In some embodiments, the first communication device and the second communication device can respectively serve as a responder and an initiator of the BA mechanism to negotiate the BA mechanism.

Specifically, when the second communication device and the first communication device are negotiating the BA mechanism, the second communication device can send an ADDBA request frame to the first communication device to request to negotiate with the first communication device to establish the BA mechanism.

Furthermore, after receiving the ADDBA request frame, the first communication device can send an ADDBA response frame to the second communication device to instruct the establishment of a BA mechanism.

In some embodiments, after the first communication device and the second communication device negotiate to establish a BA mechanism, the second communication device can send at least one data frame to the first communication device, and the first communication device receives the data frame sent by the second communication device after negotiating to establish a BA mechanism with the second communication device.

In S32, a first radio frame is sent, where the first radio frame is used to indicate a state of in-device coexistence of the first communication device during reception of the data frame and/or after the reception of the data frame is completed.

Optionally, the first communication device sends a first radio frame, including at least one of the following:
sending a first radio frame when there is the in-device coexistence during reception of the data frame;
sending the first radio frame after receiving a second radio frame, where the second radio frame is used to request the first communication device to perform BA feedback, and the second radio frame includes a BA request frame or a multi-user BA request frame.

Optionally, the first radio frame includes a first identification bit. If the first communication device sends the first radio frame during reception of the data frame, and the identification value of the first identification bit is a first value, the first radio frame is used to indicate that the first communication device has an in-device coexistence during the reception of the data frame;
if the first communication device sends the first radio frame after receiving the second radio frame, when the identification value of the first identification bit is the first value, the first radio frame is used to indicate that there is in-device coexistence in the first communication device after completing reception of the data frame; when the identification value of the first identification bit is the second value, the first radio frame is used to indicate that there is no in-device coexistence in the first communication device during the reception of the data frame and after completing reception of the data frame.

Optionally, when the identification value of the first identification bit is the first value, the first radio frame further includes a first identification field, and the first identification field is used to indicate the duration of the in-device coexistence of the first communication device.

When the identification value of the first identification bit is the first value, the first radio frame further includes a second identification field, and the second identification field is used to indicate the data frame reception state of the first communication device.

Optionally, in the case that the first communication device has an in-device coexistence, the method further includes at least one of the following:
the first communication device suspending receiving the data frame for a duration of the in-device coexistence existing in the first communication device;
when there is a first data frame that the first communication device has not received, the first communication device receiving the first data frame after the duration of the in-device coexistence existing in the first communication device ends.

Optionally, when there is no in-device coexistence in the first communication device, the method further includes:
when the first communication device has an unreceived first data frame, the first communication device receiving the first data frame.

The communication method involved in the embodiments of the present disclosure may include at least one of the aforementioned steps and embodiments. For example, any one of steps S31 and S32 may be implemented as an independent embodiment, and steps S31 and S32 may be implemented as independent embodiments, but are not limited thereto.

FIG. 4 is a second flowchart of a communication method according to an embodiment of the present disclosure. As shown in FIG. 4, the method is executed by a second communication device, and the method includes the following steps.

In S41, a data frame is sent after negotiating with the first communication device to establish a BA mechanism.

In some embodiments, the first communication device and the second communication device may respectively serve as a responder and an initiator of the BA mechanism to negotiate the BA mechanism.

Specifically, when the second communication device and the first communication device are negotiating the BA mechanism, the second communication device may send an ADDBA request frame to the first communication device to request to negotiate with the first communication device to establish the BA mechanism.

Furthermore, after receiving the ADDBA request frame, the first communication device may send an ADDBA response frame to the second communication device to instruct the establishment of a BA mechanism.

In some embodiments, after the first communication device and the second communication device negotiate to establish a BA mechanism, the second communication device can send at least one data frame to the first communication device, and the first communication device receives the data frame sent by the second communication device after negotiating to establish a BA mechanism with the second communication device.

In S42, a first radio frame is received, where the first radio frame is used to indicate a state of in-device coexistence of the first communication device during reception of a data frame and/or after the reception of the data frame is completed.

Optionally, receiving a first radio frame includes at least one of the following:
the second communication device receiving the first radio frame during sending the data frame;
the second communication device receiving the first radio frame after sending a second radio frame, where the second radio frame is used to request the first communication device to perform BA feedback, and the second radio frame includes a BA request frame or a multi-user BA request frame.

Optionally, the first radio frame includes a first identification bit. If the second communication device receives the first radio frame during the sending of the data frame, and the identification value of the first identification bit is a first value, the first radio frame is used to indicate that the first communication device has an in-device coexistence during the reception of the data frame;
if the second communication device receives the first radio frame after sending the second radio frame, when the identification value of the first identification bit is the first value, the first radio frame is used to indicate that there is in-device coexistence in the first communication device after completing reception of the data frame; when the identification value of the first identification bit is the second value, the first radio frame is used to indicate that there is no in-device coexistence in the first communication device during the reception of the data frame and after completing reception of the data frame.

Optionally, when the identification value of the first identification bit is the first value, the first radio frame further includes a first identification field, and the first identification field is used to indicate the duration of the in-device coexistence of the first communication device.

When the identification value of the first identification bit is the first value, the first radio frame further includes a second identification field, and the second identification field is used to indicate a data frame reception state of the first communication device.

Optionally, in the case that the first communication device has an in-device coexistence, the method further includes at least one of the following:
the second communication device suspending sending the data frame for a duration of the in-device coexistence existing in the first communication device;
when there is a first data frame that has not been received by the first communication device, the second communication device sending the first data frame after a duration of the in-device coexistence existing in the first communication device ends.

Optionally, in the case that there is no in-device coexistence in the first communication device, the method further includes:
when the first communication device has an unreceived first data frame, the second communication device sending the first data frame.

The communication method involved in the embodiments of the present disclosure may include at least one of the aforementioned steps and embodiments. For example, any one of steps S41 and S42 may be implemented as an independent embodiment, and steps S41 and S42 may be implemented as independent embodiments, but are not limited thereto.

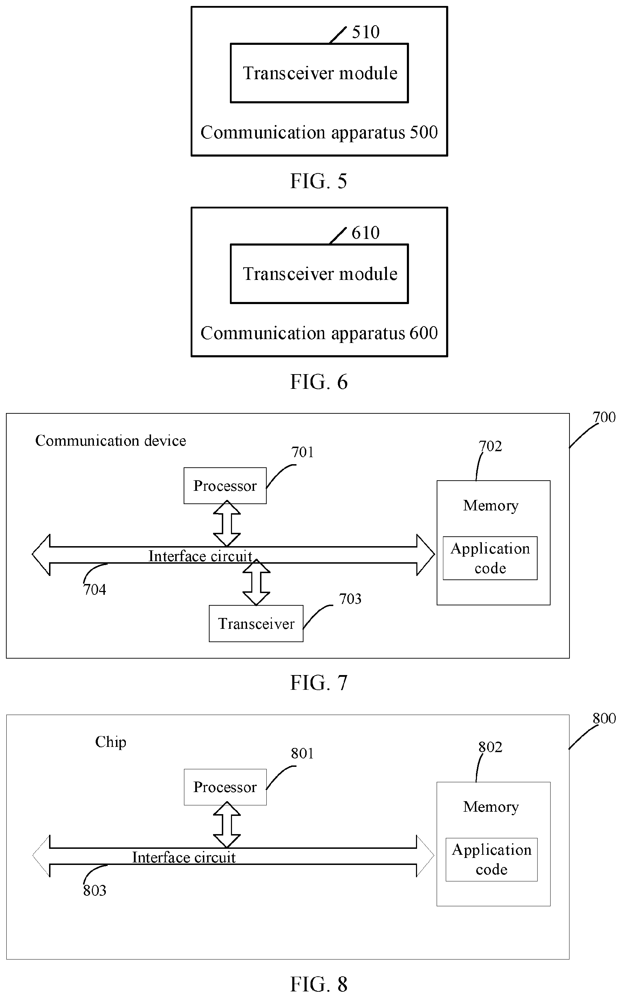

FIG. 5 is a structural schematic diagram of a communication device according to an embodiment of the present disclosure. As shown in FIG. 5, the communication apparatus 500 may include a transceiver module 510.

In some embodiments, the transceiver module 510 is configured to receive a data frame after negotiating with the second communication device to establish a block acknowledgement (BA) mechanism; and to send a first radio frame, where the first radio frame is used to indicate a state of in-device coexistence of the first communication device during reception of the data frame and/or after reception of the data frame is completed.

Optionally, the above-mentioned transceiver module 510 is configured to execute at least one of the transceiver steps (such as step S201, step S202, step S211-step S213, step S31-step S32, but not limited to this) performed by the first communication device in any of the above methods, which will not be repeated here.

FIG. 6 is a second structural diagram of a communication device according to an embodiment of the present disclosure. As shown in FIG. 6, a communication apparatus 600 may include a transceiver module 610.

In some embodiments, the above-mentioned transceiver module 610 is configured to send a data frame after negotiating with the first communication device to establish a BA mechanism; and receive a first radio frame, which is used to indicate a state of in-device coexistence of the first communication device during reception of the data frame and/or after completing the reception of the data frame.

Optionally, the above-mentioned transceiver module 610 is configured to execute at least one of the transceiver steps (such as steps S203-S204, steps S215-S217, steps S41-S42, but not limited to these) performed by the second communication device in any of the above methods, which will not be repeated here.

It should be understood that the division of the above units or modules is only a division of logical functions. In actual implementation, they can be fully or partially integrated into one physical entity, or they can be physically separated. In addition, the units or modules can be implemented in the form of a processor calling software: for example, including a processor, the processor is connected to a memory, the memory stores instructions, and the processor calls the instructions stored in the memory to implement any of the above methods or implement the functions of the above units or modules, where the processor is, for example, a general-purpose processor, such as a central processing unit (CPU) or a microprocessor, and the memory is a memory inside or outside the device. Alternatively, the units or modules in the device may be implemented in the form of hardware circuits, and the functions of some or all of the units or modules may be implemented by designing the hardware circuits. The hardware circuits may be understood as one or more processors. For example, in one implementation, the hardware circuits are application-specific integrated circuits (ASICs), and the functions of some or all of the above units or modules may be implemented by designing the logical relationships of the components within the circuits. For another example, in another implementation, the hardware circuits may be implemented by programmable logic devices (PLDs). For example, field programmable gate arrays (FPGAs) may include a large number of logic gate circuits, and the connection relationships between the logic gate circuits may be configured through configuration files, thereby implementing the functions of some or all of the above units or modules. All units or modules of the above apparatuses may be implemented entirely by a processor calling software, or entirely by a hardware circuit, or partially by a processor calling software, with the remainder implemented by a hardware circuit.

In the embodiments of the present disclosure, the processor is a circuit with signal processing capabilities. In one implementation, the processor may be a circuit with instruction reading and execution capabilities, such as a central processing unit (CPU), a microprocessor, a graphics processing unit (GPU) (which can be understood as a microprocessor), or a digital signal processor (DSP). In another implementation, the processor may implement certain functions through the logical relationship of the hardware circuit. The logical relationship of the above-mentioned hardware circuit is fixed or reconfigurable. For example, the processor is a hardware circuit implemented by an application-specific integrated circuit (ASIC) or a programmable logic device (PLD), such as an FPGA. In a reconfigurable hardware circuit, the process of the processor loading a configuration document to implement the hardware circuit configuration can be understood as the process of the processor loading instructions to implement the functions of some or all of the above units or modules. In addition, it can also be a hardware circuit designed for artificial intelligence, which can be understood as ASIC, such as the Neural Network Processing Unit (NPU), the Tensor Processing Unit (TPU), the Deep Learning Processing Unit (DPU), etc.

FIG. 7 is a structural schematic diagram of a communication device provided in an embodiment of the present disclosure. The communication device 700 can be the first communication device or the second communication device, or can be a chip, chip system, or processor that supports the first or second communication device in implementing any of the above methods. The communication device can be used to implement the methods described in the above method embodiments. For details, the description of the above method embodiments may be referred to.

As shown in FIG. 7, the communication device 700 includes one or more processors 701. The processor 701 can be a general-purpose processor or a dedicated processor, for example, a baseband processor or a central processing unit. The baseband processor can be used to process communication protocols and communication data, and the central processing unit can be used to control the communication apparatus (such as a base station, a baseband chip, a terminal device, a terminal device chip, a DU or a CU, etc.), execute programs, and process program data. The communication device 700 is used to perform any of the above methods.

In some embodiments, the communication device 700 further includes one or more memories 702 for storing instructions. Optionally, all or part of the memories 702 may be located outside the communication device 700.

In some embodiments, the communication device 700 further includes one or more transceivers 703. When the communication device 700 includes one or more transceivers 703, the transceiver 703 performs at least one of the communication steps of sending and/or receiving in the above methods (e.g., steps S201 to S204, steps S211-S213, steps S215-S217, steps S31-S32, steps S41-S42, but not limited thereto), and the processor 701 executes at least one of the other steps (such as step S214, but not limited thereto).

In some embodiments, the transceiver may include a receiver and/or a transmitter. The receiver and transmitter may be separate or integrated. Optionally, the terms transceiver, transceiver unit, transceiver machine, and transceiver circuit may be used interchangeably; the terms transmitter, transmitting unit, transmitter machine, and transmitting circuit may be used interchangeably; and the terms receiver, receiving unit, receiver machine, and receiving circuit may be used interchangeably.

In some embodiments, the communication device 700 may include one or more interface circuits 704. Optionally, the interface circuit 704 is connected to the memory 702. The interface circuit 704 may be configured to receive signals from the memory 702 or other apparatuses, and may be configured to send signals to the memory 702 or other apparatuses. For example, the interface circuit 704 may read instructions stored in the memory 702 and send the instructions to the processor 701.

The communication device 700 described in the above embodiment may be the first communication device or the second communication device, but the scope of the communication device 700 described in the present disclosure is not limited thereto, and the structure of the communication device 700 may not be limited by FIG. 7. The communication device may be an independent device or may be part of a relatively large device. For example, the above communication device may be: 1) an independent integrated circuit (IC), or a chip, or a chip system or subsystem; (2) a collection of one or more ICs, optionally, the above collection of IC may also include a storage component for storing data or programs; (3) an ASIC, such as a modem; (4) a module that can be embedded in other device(s); (5) a receiver, a terminal device, an intelligent terminal device, a cellular phone, a wireless device, a handheld device, a mobile unit, an in-vehicle device, a network device, a cloud device, an artificial intelligence device, etc.; (6) others, etc.

FIG. 8 is a structural schematic diagram of a chip 800 according to an embodiment of the present disclosure. The chip 800 includes one or more processors 801, and the chip 800 is configured to execute any of the above methods.

In some embodiments, the chip 800 further includes one or more interface circuits 803. Optionally, the interface circuit 803 is connected to the memory 802. The interface circuit 803 can be used to receive signals from the memory 802 or other apparatuses, and the interface circuit 803 can be used to send signals to the memory 802 or other apparatuses. For example, the interface circuit 803 can read instructions stored in the memory 802 and send the instructions to the processor 801.

In some embodiments, the interface circuit 803 executes at least one of the communication steps such as sending and/or receiving in the above methods (for example, step S201-step S204, step S211-step S213, step S215-step S217, step S31-step S32, step S41-step S42, but not limited to these), and the processor 801 executes at least one of the other steps (for example, step S214, but not limited to this).

In some embodiments, terms such as interface circuit, interface, transceiver pin, and transceiver may be used interchangeably.

In some embodiments, the chip 800 further includes one or more memories 802 for storing instructions. Alternatively, all or part of the memory 802 may be external to the chip 800.

The present disclosure also provides a storage medium having instructions stored thereon. When the instructions are executed on the communication device 700, the communication device 700 executes any of the above methods. Optionally, the storage medium is an electronic storage medium. Optionally, the storage medium is a computer-readable storage medium, but is not limited thereto and may also be a storage medium readable by other apparatuses. Optionally, the storage medium may be a non-transitory storage medium, but is not limited thereto and may also be a temporary storage medium.

The present disclosure also provides a program product, which, when executed by the communication device 700, enables the communication device 700 to perform any of the above methods. Optionally, the program product is a computer program product.

The present disclosure also provides a computer program, which, when run on a computer, enables the computer to execute any of the above methods. The above description is only embodiments of the present disclosure and an explanation of the technical principles used. Those skilled in the art should understand that the scope of disclosure involved in the present disclosure is not limited to the technical solutions formed by a specific combination of the above-mentioned technical features, but should also cover other technical solutions formed by any combination of the above-mentioned technical features or their equivalent features without departing from the above-mentioned disclosed concepts, for example, the technical solutions formed by replacing the above-mentioned features with the technical features with similar functions disclosed in the present disclosure (but not limited thereto).

## Claims

1. A communication method, applied to a first communication device, the method comprising:
receiving a data frame after negotiating with a second communication device to establish a block acknowledgement (BA) mechanism; and
sending a first radio frame, wherein the first radio frame is used to indicate a state of in-device coexistence of the first communication device during reception of the data frame and/or after reception of the data frame is completed.

2. The method according to claim 1, wherein sending the first radio frame comprises at least one of:
sending the first radio frame when the in-device coexistence exists during reception of the data frame;
sending the first radio frame after receiving a second radio frame, wherein the second radio frame is used to request the first communication device to perform BA feedback, and the second radio frame comprises a BA request frame or a multi-user BA request frame.

3. The method according to claim 1 or 2, wherein the first radio frame comprises a first identification bit, and in a case that the first radio frame is sent during the reception of the data frame, and an identification value of the first identification bit is a first value, the first radio frame is used to indicate that the in-device coexistence exists in the first communication device during the reception of the data frame;
in a case that the first radio frame is sent after receiving the second radio frame, and the identification value of the first identification bit is the first value, the first radio frame is used to indicate that the in-device coexistence exists in the first communication device after the reception of the data frame is completed; when the identification value of the first identification bit is a second value, the first radio frame is used to indicate that no in-device coexistence exists in the first communication device during the reception of the data frame and after the reception of the data frame is completed.

4. The method according to claim 3, wherein when the identification value of the first identification bit is the first value, the first radio frame further comprises a first identification field, and the first identification field is used to indicate a duration of the in-device coexistence existing in the first communication device.

5. The method according to claim 4, wherein the first radio frame further comprises a second identification field, and the second identification field is used to indicate a data frame reception state of the first communication device.

6. The method according to claim 5, wherein in a case that the in-device coexistence exists in the first communication device, the method further comprises at least one of:
suspending reception of the data frame for the duration of the in-device coexistence existing in the first communication device;
in a case that the first communication device has an unreceived first data frame, receiving the first data frame after the duration of the in-device coexistence existing in the first communication device ends.

7. The method according to claim 5, wherein in a case that no in-device coexistence exists in the first communication device, the method further comprises:
when the first communication device has an unreceived first data frame, receiving the first data frame.

8. A communication method, applied to a second communication device, the method comprising:
sending a data frame after negotiating with a first communication device to establish a BA mechanism; and
receiving a first radio frame, wherein the first radio frame is used to indicate a state of in-device coexistence of the first communication device during reception of the data frame and/or after reception of the data frame is completed.

9. The method according to claim 8, wherein receiving the first radio frame comprises at least one of:
receiving the first radio frame during sending of the data frame;
receiving the first radio frame after sending a second radio frame, wherein the second radio frame is used to request the first communication device to perform BA feedback, and the second radio frame comprises a BA request frame or a multi-user BA request frame.

10. The method according to claim 8 or 9, wherein the first radio frame comprises a first identification bit, and in a case that the first radio frame is received during sending of the data frame, and an identification value of the first identification bit is a first value, the first radio frame is used to indicate that the in-device coexistence exists in the first communication device during the reception of the data frame;
in a case that the first radio frame is received after sending the second radio frame, and the identification value of the first identification bit is the first value, the first radio frame is used to indicate that the in-device coexistence exists in the first communication device after the reception of the data frame is completed; when the identification value of the first identification bit is a second value, the first radio frame is used to indicate that no in-device coexistence exists in the first communication device during the reception of the data frame and after the reception of the data frame is completed.

11. The method according to claim 10, wherein when the identification value of the first identification bit is the first value, the first radio frame further comprises a first identification field, and the first identification field is used to indicate a duration of the in-device coexistence existing the first communication device.

12. The method according to claim 11, wherein the first radio frame further comprises a second identification field, and the second identification field is used to indicate a data frame reception state of the first communication device.

13. The method according to claim 12, wherein in a case that the in-device coexistence exists in the first communication device, the method further comprises at least one of:
suspending sending of the data frame for the duration of the in-device coexistence existing in the first communication device;
in a case that the first communication device has an unreceived first data frame, sending the first data frame after the duration of the in-device coexistence existing in the first communication device ends.

14. The method according to claim 12, wherein in a case that no in-device coexistence exists in the first communication device, the method further comprises:
when the first communication device has an unreceived first data frame, sending the first data frame.

15. A communication apparatus, comprising:
a transceiver module, configured to receive a data frame after negotiating with a second communication device to establish a block acknowledgement (BA) mechanism;
wherein the transceiver module is configured to send a first radio frame, and the first radio frame is used to indicate a state of in-device coexistence of the first communication device during reception of the data frame and/or after reception of the data frame is completed.

16. A communication apparatus, comprising:
a transceiver module, configured to send a data frame after negotiating with a first communication device to establish a BA mechanism;
wherein the transceiver module is configured to receive a first radio frame, and the first radio frame is used to indicate a state of in-device coexistence of the first communication device during reception of the data frame and/or after reception of the data frame is completed.

17. A communication device, comprising:
one or more processors;
wherein the processor is configured to execute the communication method according to any one of claims 1 to 7 or claims 8 to 14.

18. A storage medium storing instructions, wherein when the instructions are executed on a communication device, the communication device executes the communication method according to any one of claims 1 to 7 or claims 8 to 14.

19. A computer program product, comprising a computer program, wherein when the computer program is executed by a processor, the computer program implements the method according to any one of claims 1 to 7, or implements the method according to any one of claims 8 to 14.

20. A communication system, comprising a first communication device and a second communication device; wherein the first communication device is configured to execute the method according to any one of claims 1 to 7, and the second communication device is configured to execute the method according to any one of claims 8 to 14.
